# FASCICULE DE BREVET EUROPEEN

(11) **EP 3 087 706 B1**
(45) Date de publication et mention de la délivrance du brevet: **17.02.2021**
(21) Numéro de dépôt: 14830975.0
(22) Date de dépôt: 17.12.2014
(51) Int. Cl.: H04L 12/58

(54) **PROCÉDÉ ET SYSTÈME DE COMMUNICATION ENTRE NAVIGATEURS WEB, UTILISANT UN ENVIRONNEMENT DE COMMUNICATION UNIFIÉE**
VERFAHREN UND SYSTEM ZUR KOMMUNIKATION ZWISCHEN WEBBROWSERN MIT EINER EINHEITLICHEN KOMMUNIKATIONSUMGEBUNG
METHOD AND SYSTEM FOR COMMUNICATION BETWEEN WEB BROWSERS, USING A UNIFIED COMMUNICATION ENVIRONMENT

(30) Priorité: 23.12.2013 FR 1363491
(43) Date de publication de la demande: 02.11.2016
(73) Titulaire: ORANGE, 75015 Paris (FR)
(72) Inventeur: LABRANCHE, Miguel, F-94380 Bonneuil sur Marne (FR); DE SNOECK, Xavier, F-75010 Paris (FR)
(74) Mandataire: Plasseraud IP
(86) Numéro de dépôt international: PCT/FR2014/053395
(87) Numéro de publication internationale: WO 2015/097367

(56) Documents cités:
- US-A1- 2001 028 654
- Anonymous: "2013 - The Year of WebRTC", , 9 janvier 2013 (2013-01-09), XP055131183, Extrait de l'Internet: URL:http://blog.tmcnet.com/blog/tom-keatin g/webrtc/2013---the-year-of-webrtc.asp [extrait le 2014-07-23]

## Description

### Domaine technique

L'invention concerne le domaine général des télécommunications, et concerne en particulier les environnements de communication unifiée permettant à des utilisateurs d'accéder via leur terminal connecté à un réseau de communication à un ensemble de services de communication via une interface utilisateur unique.

Plus précisément, l'invention concerne un procédé et un système de communication selon une technologie de type WebRTC sur un réseau de communication.

### Etat de la technique

Il existe actuellement sur le marché de la communication des solutions dites de communication unifiée, c'est-à-dire des solutions visant à offrir un ensemble de services principalement destinés aux professionnels en entreprise permettant d'intégrer (« unifier ») étroitement :
- des moyens de communications interpersonnels temps réel, comme la téléphonie fixe et mobile, la visiophonie, ponts de conférence audio / vidéo, etc. ;
- des outils de travail collaboratif (comme la messagerie instantanée, la présence, les systèmes de conférences par le web, de partage et de gestion de documents...) ;
- un environnement informatique, avec des outils de bureautique, tels qu'un client de messagerie électronique, un agenda, une suite logicielle bureautique.

Dans ce type de solution, la gestion des droits d'accès des utilisateurs autorisés à accéder au service de communication repose généralement sur la gestion de profils prédéfinis, par un administrateur. Ainsi, chaque utilisateur du service dispose des accès aux fonctionnalités définies par le profil dont il relève, et il ne peut obtenir d'accès à des fonctionnalités supplémentaires que si l'administrateur lui affecte un autre profil prédéfini. Par ailleurs, chaque profil correspondant à un ensemble de fonctionnalités, un utilisateur ne pourra pas obtenir l'accès à une fonctionnalité supplémentaire seulement.

Le type de solution de communication précitée est bien adapté au marché des entreprises où la gestion des accès des collaborateurs est généralement centralisée auprès d'une direction des systèmes d'information (DSI). Cependant, dans un contexte d'applications, par exemple celles destinées au grand public, où c'est l'utilisateur final généralement qui paie l'accès à ses services de communication, la gestion par profils d'utilisateurs exposée ci-dessus manque de flexibilité, en effet l'utilisateur est facturé pour un ensemble de services même s'il n'en utilise qu'une partie seulement. Par ailleurs, l'utilisateur n'a généralement pas la possibilité de choisir les fonctionnalités de communication qu'il veut utiliser, en fonction d'un contexte lié à sa localisation géographique (domicile ou lieu de travail), aux équipements ou types de terminaux dont il dispose, ou encore en fonction du débit binaire dont il dispose par l'intermédiaire de son équipement de connexion au réseau.

Par ailleurs, avec le développement du langage HTML5 (*HyperText Markup Language 5*) de nouvelles perspectives s'ouvrent aux développeurs d'applications avec la possibilité de rendre les interfaces (API - *Application Programming Interface*) avec les applications web, accessibles de façon normalisée au sein d'un navigateur web. C'est la voie suivie par la l'IETF (*Internet Engineering Task Force*) et le W3C (*World Wide Web Consortium*) avec la norme RTCWEB/WebRTC (*Web Real-Time Communication*) définie par deux types de spécifications : une spécification de protocoles (effectuée à l'IETF) et une spécification d'APIs Javascript (effectuée au W3C). Les deux spécifications précitées visent à fournir un environnement selon lequel une application Javascript incorporée dans n'importe quelle page web, lue par n'importe quel navigateur compatible, et autorisée de manière appropriée par son utilisateur, est capable d'établir une communication utilisant de l'audio, de la vidéo (et des données auxiliaires), sans que la plateforme du navigateur ne limite les types d'application dans lesquels cette fonctionnalité de communication peut être utilisée. Actuellement, des éditeurs de navigateur web proposent des versions compatibles avec ce nouveau service entre navigateurs, par exemple Google avec le navigateur Chrome™, Mozilla avec le navigateur Firefox™, Opéra Software avec le navigateur Opéra™, pour ordinateur et terminal mobile, Ericsson avec le navigateur Bowser™ développé pour terminal mobile.

Typiquement, conformément aux spécifications RTCWEB/WebRTC (désigné pour simplifier "standard WebRTC" dans la présente description), lorsqu'un premier utilisateur souhaite établir une communication audio ou vidéo, depuis son navigateur web compatible WebRTC, avec un second utilisateur sur le réseau Internet, il commence par se connecter via son navigateur à un serveur d'application fournissant le service de communication WebRTC. Après une opération d'authentification éventuelle, le navigateur charge, via une page web, l'application web (ensemble de fonctions Javascript ou similaires) conforme aux spécifications RTCWEB et adaptée à interagir avec les APIs susmentionnées (conformes aux spécifications WebRTC) qui sont incorporées nativement dans le navigateur. Ensuite, le premier utilisateur choisit, via la page web de connexion au serveur d'application, un identifiant du second utilisateur, puis entre une commande - par exemple par un clic sur un bouton d'action affiché dans la page web ouverte dans le navigateur - pour déclencher l'appel audio ou vidéo vers le second utilisateur. Un tel système est décrit par exemple dans le document de l'art antérieur XP055131183, Anonymous: "2013 - The Year of WebRTC", 9 janvier 2013 (2013-01-09).

### Exposé de l'invention

La présente invention vise notamment à améliorer la situation exposée plus haut relative notamment au manque de flexibilité des solutions actuelles de communication unifiée, en tirant partie des possibilités offertes par le standard WebRTC.

A cet effet, selon un premier aspect, l'invention concerne un procédé de communication selon une technologie de type WebRTC sur un réseau de communication. Conformément à l'invention ce procédé comprend des étapes de :
- envoi d'un message de demande d'activation de services, par une application web chargée dans un navigateur web d'un premier terminal d'un premier utilisateur, à destination d'un serveur d'applications, afin de déterminer des services de communication actuellement autorisés pour le premier utilisateur ;
- réception par le navigateur d'un message de réponse d'activation de services, le message de réponse contenant des données d'accès à un ensemble de services de communication, et activation par l'application web dans le premier terminal, de chaque service de l'ensemble de services ;
- mise à jour d'une interface graphique d'environnement de communication, affichée dans le premier terminal par l'application web, avec l'ensemble de services de communication.

Selon une caractéristique particulière de l'invention, le procédé de communication précité comprend la connexion préalable du premier terminal à un serveur d'environnement, fournissant un environnement de communication unifiée, et le chargement dans le navigateur web du premier terminal de l'application web incorporée dans une page web fournie par le serveur d'environnement.

Le fait de combiner, selon l'invention, dans le cadre d'un environnement de communication unifiée, une technologie de type WebRTC avec la mise en œuvre de deux serveurs, l'un pour fournir l'interface graphique de l'environnement de communication, et l'autre pour fournir les services de communication proprement dits, avec notamment un tel mécanisme automatique de "rafraichissement" (mise à jour) des services autorisés pour un utilisateur donné, après la connexion d'un navigateur de l'utilisateur au serveur d'environnement, permet de créer les conditions techniques favorables à la création d'une plateforme de services de communication qui soit plus flexible que les solutions connues à ce jour. En d'autres termes, l'invention permet la fourniture d'une plateforme de services de communication auxquels l'utilisateur peut souscrire ou se désabonner quand il le désire et pour les services qu'il choisit, à la différence de la gestion de services par profils d'utilisateurs évoquée plus haut.

Ainsi, selon une caractéristique remarquable de l'invention, le procédé de communication comprend une opération de mise à disposition des utilisateurs de l'environnement de communication, d'une plateforme de services de communication sous forme d'applications indépendantes, par le serveur d'applications, cette opération comprenant :
- l'activation ou la désactivation automatique d'un service de communication donné pour un utilisateur considéré, en fonction de l'état de souscription ou de dé-souscription au service par l'utilisateur, et/ou en fonction d'un état contextuel de l'utilisateur lié au type de terminal de l'utilisateur et/ou au débit de connexion réseau du terminal, et/ou en fonction d'une information de géolocalisation du terminal ;
- l'activation ou la désactivation, à la demande de l'utilisateur, en réponse à un message de demande d'activation ou de désactivation transmis par un terminal de l'utilisateur ;
- la génération et l'envoi à destination d'un terminal d'utilisateur, d'un message de réponse d'activation ou de désactivation de service, en réponse à un message de demande d'activation ou de désactivation de service.

Grâce à une telle plateforme d'applications fournie par le serveur d'applications, l'activation ou la désactivation d'un service de communication peut être effectuée à la demande de l'utilisateur ou bien en fonction de conditions liées à une situation contextuelle de l'utilisateur. Par exemple selon que l'utilisateur se trouve sur son lieu de travail ou à son domicile, des applications peuvent être autorisées et d'autres non (pour des raisons de confidentialité d'accès par exemple), ou bien, selon un autre exemple, des applications peuvent être temporairement inhibées si elles ne sont pas compatibles avec les capacités d'un type de terminal utilisé, ou encore si le type de réseau d'accès et le débit de connexion au réseau du terminal de l'utilisateur n'est pas compatible avec certaines applications (par exemple la vidéoconférence). Les informations contextuelles de l'utilisateur pouvant déclencher l'activation ou la désactivation de certaines applications de communications sont fournies de manière générale par le terminal (notamment au moyen de capteurs dédiés, telle qu'une application de géolocalisation) à l'application web chargée par le navigateur du terminal, et transférées ensuite dans les messages d'activation de services transmis par le navigateur au serveur d'applications.

Selon un mode de réalisation de l'invention, le procédé de communication comprend la sélection via l'interface graphique susmentionnée, d'un identifiant d'un second utilisateur et d'un service de communication parmi l'ensemble de services autorisés pour le premier utilisateur et l'envoi par le navigateur du premier terminal d'un message de demande de communication selon le service sélectionné, à destination d'un second terminal associé à l'identifiant du second utilisateur.

Cette disposition permet d'associer de manière aisée pour l'utilisateur, afin d'effectuer une demande de communication, un identifiant d'un contact (par exemple une adresse email ou un numéro de téléphone) avec une application de communication (appel audio ou messagerie instantanée par exemple).

De plus, selon une caractéristique de l'invention, le procédé comprend, suite à la réception par le second terminal connecté au serveur d'environnement, du message de demande de communication au service sélectionné par le premier utilisateur, des étapes de :
- détermination de l'état d'activité pour le second utilisateur du service sélectionné par le premier utilisateur, et si le service sélectionné n'est pas actif,
- proposition automatique au second utilisateur via un moyen d'interface utilisateur du second terminal de souscrire au service sélectionné par le premier utilisateur ;
- sur réponse positive du second utilisateur entrée via un moyen d'interface utilisateur du second terminal, envoi d'un message de demande d'activation du service sélectionné, par l'application web du navigateur du second terminal, à destination du serveur d'applications ;
- réception par le second navigateur d'un message de réponse d'activation du service sélectionné par le premier utilisateur, et activation par l'application web dans le second terminal du service sélectionné.

Grâce à cette caractéristique, un premier utilisateur peut tenter de communiquer avec un second utilisateur qui est inscrit dans l'environnement, avec un mode de communication choisi par le premier utilisateur, même si le second utilisateur n'a pas souscrit au mode de communication choisi. L'environnement propose alors automatiquement au second utilisateur de souscrire à ce mode de communication, et la mise en relation des deux utilisateurs peut être alors automatiquement déclenchée dès que la souscription est effective.

Selon un mode de réalisation de l'invention, chaque service de communication correspond à un bloc de code présent initialement dans le code source de l'application web chargée par un navigateur d'un terminal d'utilisateur. Le bloc de code d'un service donné est alors activé suite à la réception, par le navigateur, d'un message de réponse d'activation du service, lors de la souscription au service par l'utilisateur, ou bien lors de la connexion du terminal au serveur d'environnement, l'utilisateur ayant déjà souscrit au service.

Ce mode de réalisation présente notamment l'avantage de minimiser le volume de données échangées entre le serveur d'applications et le terminal utilisateur pour l'activation du service considéré.

Selon un mode de réalisation alternatif par rapport au précédent, chaque service de communication correspond à un bloc de code non présent initialement dans le code source de l'application web chargée par un navigateur d'un terminal d'utilisateur. Dans ce cas, l'activation d'un service correspondant à un bloc de code est réalisée par la transmission du bloc de code source correspondant, par l'intermédiaire d'un message d'activation du service, reçu dans le terminal suite à la souscription au service par l'utilisateur, ou lors de la connexion du terminal au serveur d'environnement, l'utilisateur ayant déjà souscrit au service.

Ce mode de réalisation présente notamment l'avantage de minimiser la taille de l'application web téléchargée par un terminal utilisateur, puisque seul le code des services actifs pour l'utilisateur est contenu dans l'application web.

En pratique, les messages de demande d'activation de services, de réponse d'activation de services, de demande de communication selon un service sélectionné, de demande d'activation d'un service sélectionné, sont des messages utilisant le protocole HTTP ou un protocole similaire compatible avec une technologie de type WebRTC. De plus l'application web chargée par le navigateur d'un terminal d'utilisateur par connexion au serveur d'environnement, est une application utilisant le langage JavaScript ou un langage similaire compatible avec une technologie de type WebRTC.

On rappelle ici que l'on entend par technologie "de type WebRTC", une technologie de communication temps réel mise en œuvre à partir d'un navigateur web reposant sur les mêmes principes que ceux définis par les spécifications RTCWEB/WebRTC actuelles ou par des évolutions futures de ces spécifications, c'est-à-dire reposant sur des navigateurs web compatibles WebRTC, c'est-à-dire sans qu'il soit nécessaire d'adjoindre à ces navigateurs des modules logiciels additionnels tels que des modules d'extension (*plugins*). D'autre part, on entend par un réseau "de type Internet", un réseau basé sur les technologies de communication mises en œuvre dans le réseau Internet, un tel réseau pouvant être également un réseau privé d'entreprise communément appelé "intranet".

Corrélativement, selon un second aspect, l'invention concerne un système de communication unifiée utilisant une technologie de type WebRTC sur un réseau de communication. Selon l'invention, ce système de communication est remarquable en ce qu'il comprend un serveur d'applications, hébergeant une plateforme de téléchargement d'applications de communication accessible par l'intermédiaire d'un navigateur web d'un terminal d'utilisateur, cette plateforme comprenant :
- des moyens d'accès à un ensemble d'applications de communication offrant chacune un service de communication distinct pouvant être souscrit par un utilisateur de manière indépendante des autre services ;
- des moyens de traitement de messages de demande d'activation ou de désactivation de services, en provenance de terminaux d'utilisateurs, les moyens de traitement étant configurés pour activer ou désactiver un service de communication pour un utilisateur considéré, en fonction d'au moins une condition liée à une situation contextuelle de l'utilisateur ;
- des moyens de génération et d'envoi à destination d'un terminal d'utilisateur, d'un message de réponse d'activation ou de désactivation de services en réponse à un message de demande d'activation ou de désactivation de services.

Selon une caractéristique particulière de l'invention, le système précité comprend en outre un serveur d'environnement, fournissant un environnement de communication unifiée, par l'intermédiaire d'une application web mise à disposition pour téléchargement à partir de navigateurs web équipant des terminaux d'utilisateurs.

Selon une mise en œuvre particulière du système selon l'invention, une condition liée à une situation contextuelle d'un utilisateur comprend au moins un élément parmi : l'état de souscription ou de dé-souscription à un service pour l'utilisateur, un type de terminal de l'utilisateur, un débit de connexion réseau du terminal de l'utilisateur, une information de géolocalisation du terminal de l'utilisateur.

Selon un troisième aspect, l'invention a pour objet une application web fournissant des fonctionnalités de communication de type WebRTC entre navigateurs web, et comprenant des instructions de programme dont l'exécution par un navigateur web d'un terminal d'un utilisateur provoque la mise en œuvre d'étapes de :
- envoi d'un message de demande d'activation de services web du navigateur à destination d'un serveur d'applications, afin de déterminer les services de communication qui sont actuellement autorisés pour l'utilisateur ;
- réception par le navigateur d'un message de réponse d'activation de services, le message de réponse contenant des données d'accès à un ensemble de services de communication, et activation dans le terminal, des services de l'ensemble de services ;
- affichage d'une interface graphique d'environnement de communication et mise à jour de cette interface graphique par le navigateur avec l'ensemble de services de communication ;
- suite à la sélection par l'utilisateur via l'interface graphique, d'un identifiant d'un second utilisateur et d'un service de communication parmi l'ensemble de services, envoi par le navigateur d'un message de demande de communication selon le service sélectionné, à destination d'un terminal du second utilisateur.

Selon un quatrième aspect, l'invention concerne un serveur de communication accessible par un navigateur web, destiné à fournir un environnement de communication unifié selon une technologie de type WebRTC entre navigateurs web, ce serveur de communication étant remarquable en ce qu'il inclut un serveur web hébergeant au moins une page web incluant une application web selon l'invention, telle que définie ci-dessus.

Selon un cinquième aspect, l'invention concerne un serveur d'applications tel que mis en œuvre dans un système de communication selon l'invention, tel que défini plus haut.

En pratique, les moyens constitutifs de l'invention qui sont compris dans les serveurs d'environnement et d'applications décrit succinctement ci-dessus, sont essentiellement implémentés sous forme logicielle c'est-à-dire un ou plusieurs programmes informatiques stockés dans une ou plusieurs mémoires, de type RAM (*Random Access Memory*), ROM (*Read Only Memory*) ou de type magnétique (disque dur par exemple), et exécutés par un processeur incorporé dans le serveur considéré.

Par conséquent, selon un dernier aspect, la présente invention vise aussi un programme d'ordinateur stocké sur un support d'informations pour la mise en œuvre de tout ou partie des étapes d'un procédé de communication, selon l'invention, lorsque le programme est exécuté par un processeur d'un système informatique.

Un tel programme d'ordinateur selon l'invention peut utiliser divers langages de programmation, et comprendre des programmes sous forme de code source, code objet, ou de code intermédiaire entre code source et code objet, tel que dans une forme partiellement compilée, ou dans n'importe quelle autre forme souhaitable.

Enfin, l'invention vise aussi un support d'enregistrement d'informations lisible par un ordinateur, et comportant des instructions de programme d'ordinateur. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un module logiciel selon l'invention peut être en particulier téléchargé sur un réseau de type Internet.

Les avantages procurés par un système de communication, un serveur d'environnement et un serveur d'applications, une application web, ainsi qu'un programme d'ordinateur, selon l'invention, tels que brièvement définis ci-dessus, sont identiques ou contribuent à ceux mentionnés plus haut en relation avec le procédé de communication selon l'invention, et ne seront par conséquent pas rappelés ici.

### Brève description des figures

D'autres caractéristiques et avantages de la présente invention ressortiront de la description détaillée qui suit, laquelle fait référence aux dessins annexés dans lesquels :
- la figure 1 illustre un système de communication unifiée conforme à l'invention ;
- la figure 2 est un diagramme représentant les échanges entre les différentes entités représentées à la figure 1 selon un exemple de mise en œuvre d'un procédé de communication selon l'invention ;
- la figure 3 représente un exemple de page web d'accueil d'un service de communication selon l'invention, après connexion d'un navigateur web à un serveur d'environnement de communication selon l'invention ;
- la figure 4 représente un exemple d'interface graphique d'un environnement de communication, selon l'invention, affichée par un navigateur web après authentification d'un utilisateur via la page web de la figure 3 ;
- la figure 5 représente l'interface graphique de la figure 4 après sélection d'un contact par l'utilisateur de l'interface et sélection d'un mode de communication pour établir une communication avec le contact sélectionné ;
- la figure 6 représente un exemple d'interface graphique affichée par un navigateur web d'un terminal utilisateur après connexion du navigateur à une page web d'accueil d'un serveur d'applications de communication selon l'invention ; et
- la figure 7 représente l'interface graphique de la figure 6 après sélection par l'utilisateur d'une icône représentant une application de communication particulière.

### Description détaillée de l'invention

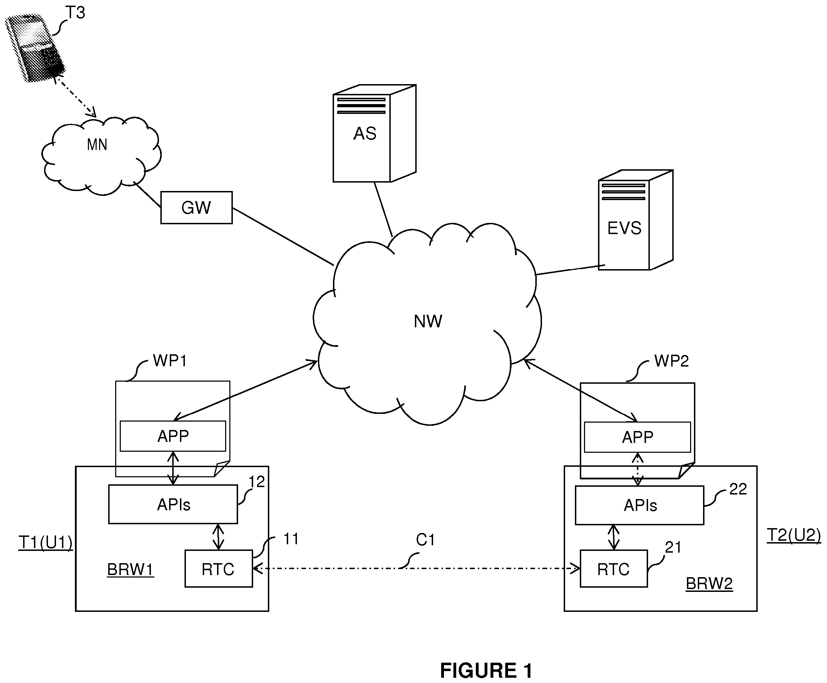

La **figure 1** illustre un système de communication unifiée conforme à l'invention. Ce système de communication tel que représenté dans cet exemple, comprend un premier navigateur web BRW1 d'un premier terminal T1 d'utilisateur (utilisateur U1), un second navigateur BRW2 d'un second terminal d'utilisateur T2 (utilisateur U2). Les terminaux d'utilisateurs précités peuvent être dans un état connecté ou non connecté à un réseau de communication NW qui est un réseau de type Internet, c'est-à-dire un réseau basé sur les technologies de communication mises en oeuvre dans le réseau Internet, en particulier le réseau NW peut être aussi un réseau d'entreprise communément appelé intranet.

Les navigateurs BRW1 et BRW2 sont des navigateurs compatibles WebRTC/RTCWEB, et à ce titre, disposent respectivement d'un ensemble 12, 22 d'interfaces API conformes aux spécifications WebRTC, et d'un module fonctionnel RTC 11, 21 conforme aux spécifications RTCWEB. On pourra obtenir plus d'informations concernant les spécifications RTCWEB/WebRTC en consultant les documents suivants :
- WebRTC 1.0: Real-time Communication Between Browsers - W3C Editor's Draft 22 March 2013 - accessible sur Internet à l'adresse suivante :
   http://dev.w3.org/2011/webrtc/editor/webrtc.html#rtcpeerconnection-interface
- Overview: Real Time Protocols for Brower-based Applications - draft-ietf-rtcweb-overview-06 - February 20, 2013 - accessible sur Internet à l'adresse suivante :
   http://datatracker.ietf.org/doc/draft-ietf-rtcweb-overview.

Les ensembles APIs 12 et 22 sont aptes respectivement à interagir avec une application web APP - dont le code utilise des langages tels que HTML, JavaScript et CSS (*Cascading Style Sheets)* - incorporée dans des pages web WP1 et WP2 téléchargées respectivement par les navigateurs BRW1 et BRW2 à une adresse web pointant sur des ressources hébergées par un serveur EVS sur le réseau NW.

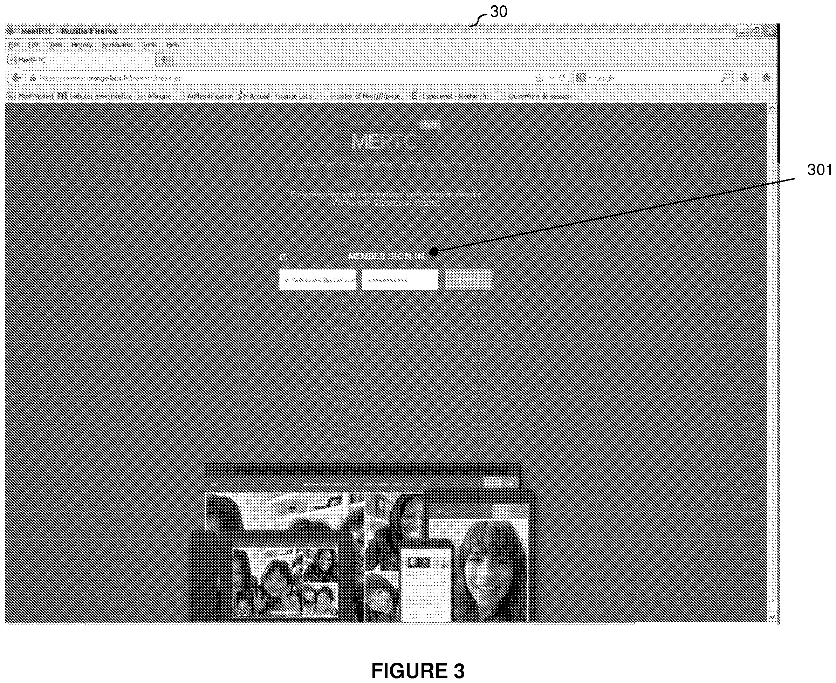

Le serveur EVS désigné ici par "serveur d'environnement" fournit plus précisément à l'adresse web précitée une page d'accueil d'un environnement de communication unifiée. La figure 3 décrite plus loin décrit un exemple de page web d'accueil d'un service de communication selon l'invention, après connexion d'un navigateur web à un serveur d'environnement de communication selon l'invention.

L'application APP fournit conformément aux spécifications WebRTC/RTCWEB, des fonctionnalités de communication RTC liées à l'environnement de communication fourni par le serveur EVS, ainsi que la signalisation permettant d'établir une telle communication entre navigateurs.

Ainsi, dans l'exemple illustré à la figure 1, si les deux navigateurs BRW1 et BRW2 ont téléchargé chacun la page web (WP1 et WP2) contenant l'application APP du service de communication unifiée selon l'invention, alors ils peuvent établir une communication temps réel de pair à pair, notamment de type voix ou vidéo, comme illustrée par la double flèche C1.

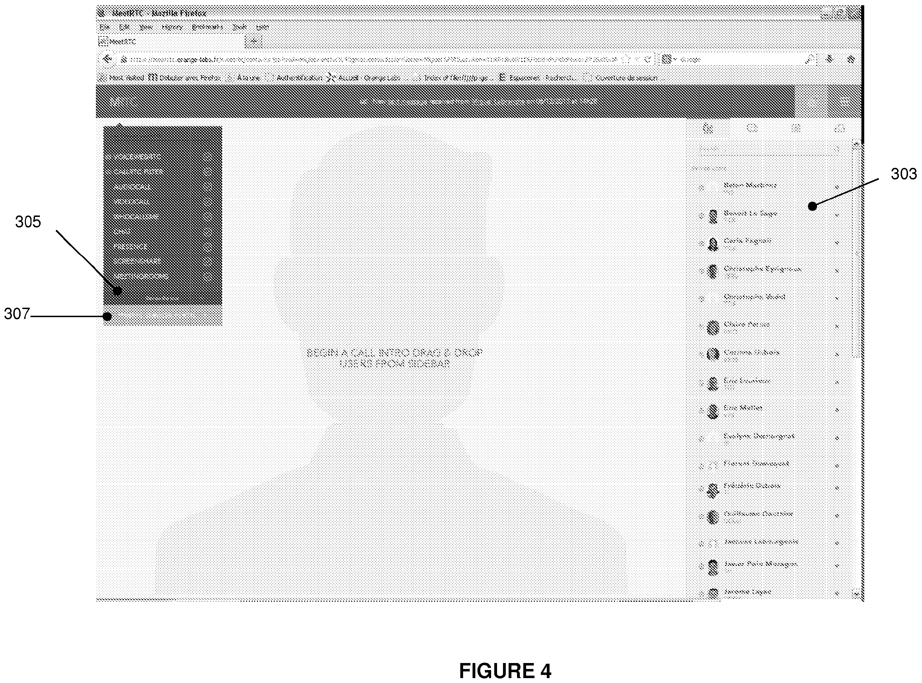

En revanche, si le navigateur BRW1 tente d'établir un appel avec le terminal dans lequel le navigateur BRW2 est installé et que ce dernier est fermé ou n'est pas connecté au serveur AS et n'a pas ouvert la page web WP2 du service, ou encore si le terminal correspondant n'est pas connecté au réseau ou si l'utilisateur (U2) du terminal T2 ne répond simplement pas à l'appel, alors la communication C1 ne peut s'établir entre les deux navigateurs BRW1 et BRW2. Dans ce cas, si l'utilisateur U2 a souscrit à une application de messagerie vocale auprès du serveur d'applications AS (voir figure 4, application Voicewebrtc), alors l'utilisateur appelant (U1) aura la possibilité de laisser un message vocal ou vidéo destiné à l'utilisateur U2.

Toujours à la figure 1, le système de communication selon l'invention comprend également un second serveur AS, désigné ici par "serveur d'applications", hébergeant une plateforme de téléchargement d'applications de communication accessible par l'intermédiaire d'un navigateur web d'un terminal d'utilisateur. En termes de modules fonctionnels, la plateforme du serveur AS comprend :
1) Un module d'accès à un ensemble d'applications de communication offrant chacune un service de communication distinct pouvant être souscrit par un utilisateur de manière indépendante des autres services. Chacune des applications de communication fournie par la plateforme du serveur AS peut être soit une application dont le code est directement fourni par le serveur AS, soit une application dont la signalisation est fournie par un serveur externe tel qu'un serveur "Node.js" tandis que le flux média est directement échangé entre les navigateurs des terminaux utilisateurs selon un mode pair-à-pair (*peer-to-peeren* anglais).
2) Un module de traitement de messages de demande d'activation de services, en provenance de terminaux d'utilisateur, tels que les terminaux T1 et T2, ayant préalablement téléchargé l'application web ; ce module de traitement est, selon l'invention, configuré pour activer ou désactiver un service de communication pour un utilisateur considéré, en fonction de plusieurs événements, notamment l'état de souscription ou de dé-souscription au service par l'utilisateur, l'état contextuel de l'utilisateur lié au type de terminal de l'utilisateur (en particulier ses capacités fonctionnelles), le débit de connexion au réseau disponible pour le terminal, ou encore une information de géolocalisation du terminal, par exemple permettant de déterminer que l'utilisateur se trouve dans un contexte professionnel ou privé.
3) Un module de génération et d'envoi à destination d'un terminal d'utilisateur, d'un message de réponse d'activation ou de désactivation de services en réponse à un message de demande d'activation ou de désactivation de services.

Enfin, sur la figure 1, on a représenté un terminal mobile T3 associé par exemple à un troisième utilisateur (U3) connecté à un réseau de téléphonie mobile MN de seconde, troisième ou quatrième génération (2G, 3G, 4G) lui-même connecté à une passerelle GW permettant de relier le réseau mobile MN au réseau NW. Ainsi, si le terminal mobile T3 est équipé d'un navigateur web compatible WebRTC, il peut alors également accéder à l'environnement de communication fourni par le serveur EVS en téléchargeant la page web d'accueil contenant l'application web APP.

Par ailleurs, dans le mode de réalisation choisi et exposé, on considère des serveurs AS et EVS qui sont hébergés par des équipements réseau distincts et éventuellement distants sur le réseau NW, cependant selon d'autres modes de réalisation les serveurs AS et EVS peuvent être implémentés dans un même équipement réseau, par exemple sous la forme de machines virtuelles distinctes hébergées par un même serveur physique. Enfin, selon une autre implémentation possible de l'invention, les fonctionnalités mises en œuvre par les deux serveurs précités peuvent être fournies par un même et unique serveur.

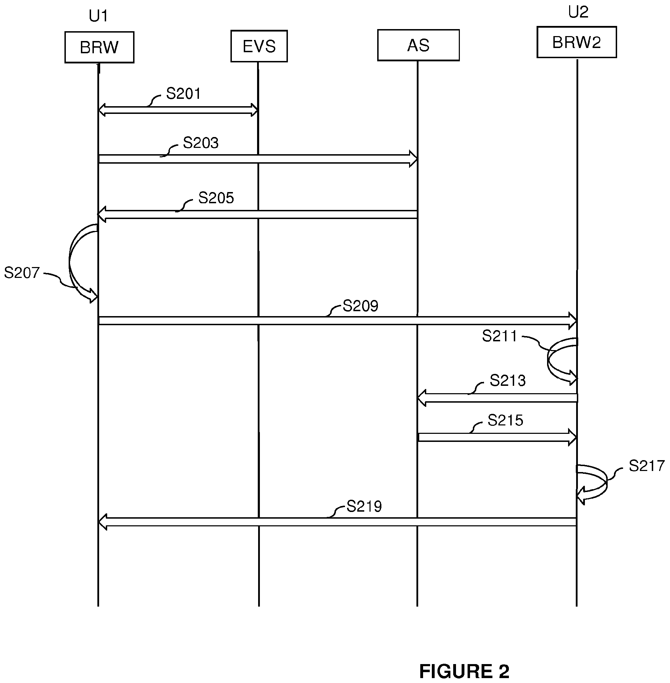

En liaison avec la **figure 2****,** on va à présent décrire les étapes principales d'un procédé de communication selon un mode de réalisation de l'invention. La figure 2 est un diagramme représentant les échanges entre les différentes entités représentées à la figure 1.

Comme représenté à la figure 2, à l'étape S201, l'utilisateur U1 se connecte via son navigateur BRW1 au serveur EVS d'environnement de communication en chargeant la page web d'accueil de l'environnement, cette dernière incluant une application web APP selon l'invention.

La **figure 3** représente un exemple de page web d'accueil (30) d'un service de communication selon l'invention, affichée sur l'écran du terminal T1 après connexion du navigateur BRW1 au serveur EVS. Dans cet exemple, après chargement de la page web 30, l'utilisateur commence par s'authentifier auprès de l'environnement de communication en entrant (bouton LOGIN, 301) des identifiants personnels tels qu'une adresse email et un mot de passe (MEMBER SIGN IN, 301). Si les identifiants saisis sont corrects, le navigateur BRW1 charge alors la page web de l'environnement de communication proprement dit, et affiche une interface graphique associée à l'environnement de communication.

A la figure 2, après chargement de la page web de l'environnement de communication, l'application web incorporée dans la page web envoie automatiquement (S203) un message de demande d'activation de services à destination du serveur d'applications AS afin de déterminer les services de communication qui sont actuellement autorisés pour l'utilisateur U1. Une application de gestion de comptes utilisateurs, dans le serveur AS, reçoit le message de demande d'activation des services pour l'utilisateur U1 et envoie (S205) à destination du navigateur BRW1 un message de réponse d'activation de services, ce message de réponse contenant des données d'accès à un ensemble de services de communication auxquels a souscrit l'utilisateur U1. Suite à cette réponse, l'application web exécutée par le navigateur BRW1, dans le terminal (T1) de l'utilisateur U1, active l'ensemble des services et met à jour (S207) l'interface graphique de l'environnement de communication, affichée dans le terminal T1.

Selon le mode de réalisation choisi et décrit, chaque service de communication correspond à un bloc de code présent initialement dans le code source de l'application web APP chargée par un navigateur d'un terminal d'utilisateur, ce bloc de code étant activé suite à la réception par le navigateur d'un message de réponse d'activation du service lors de la souscription au service par l'utilisateur ou bien lors de la connexion du terminal au serveur d'environnement, l'utilisateur ayant déjà souscrit au service. En pratique, dans ce mode de réalisation, tous les fichiers JavaScript associés à la page web sont téléchargés sur le navigateur lors de la connexion du terminal utilisateur. Chacun de ces fichiers contient des fonctions qui correspondent à des services, et ces fonctions sont activées - c'est-à-dire que les services correspondants peuvent être utilisés -, uniquement lorsque l'utilisateur a souscrit à ces services. Par exemple, dans ce mode de réalisation, des fonctions JavaScript correspondant à un service peuvent être dans un état actif ou inactif selon qu'une variable booléenne du code JavaScript correspondant est positionnée à vrai ou faux, la mise à jour de cette variable étant effectuée lors de la réception d'un message de réponse d'activation de service transmis par le serveur d'applications AS.

Selon une variante de réalisation les blocs de code correspondants aux divers services de communication ne sont pas présents initialement dans le code HTML de l'application web chargée par un navigateur d'un terminal d'utilisateur. L'activation d'un service correspondant à un bloc de code étant réalisée par la transmission du bloc de code correspondant, par l'intermédiaire d'un message d'activation du service transmis par le serveur d'applications AS au terminal utilisateur, suite à la souscription au service par l'utilisateur ou suite à la connexion du terminal au serveur d'environnement, l'utilisateur ayant déjà souscrit au service. En pratique dans cette variante de réalisation, le message d'activation d'un service donné modifie le code HTML de la page web en ajoutant de manière dynamique des balises <script> permettant au code JavaScript correspondant au service considéré d'être appelé dynamiquement par la page web. Ces balises sont par conséquent ajoutées ou retirées dans le code HTML de la page web chargée (WP1, WP2 - figure 1) dans le navigateur, selon l'état de souscription ou de désabonnement de l'utilisateur pour le service considéré. Ainsi, selon les deux variantes de réalisation susmentionnées, les données d'accès à des services, mentionnées plus haut, contenues dans un message de réponse émis par le serveur d'applications AS sont des éléments de code programme permettant de réaliser soit l'affectation d'une valeur (vrai ou faux) à une variable booléenne d'activation d'une fonctionnalité de service, soit l'ajout d'un bloc de code correspondant à une fonctionnalité de service.

La **figure 4** représente un exemple d'interface graphique d'un environnement de communication, selon l'invention, affichée par un navigateur web après authentification d'un utilisateur via la page web de la figure 3. Comme représenté sur la figure 4, l'interface graphique de l'environnement comporte une partie 303 située à droite de la fenêtre et comportant une liste de contacts de l'utilisateur, une liste déroulante 305 permettant de visualiser une liste de services de communication activés pour l'utilisateur connecté. Cette liste correspond au résultat visuel de la mise à jour susmentionnée (étape S207, figure 2) de l'interface graphique de l'environnement de communication, affichée dans le terminal T1.

Ainsi, dans cet exemple la liste des services activés comprend à titre d'exemples : une messagerie vocale (Voicewebrtc), un service de filtrage d'appel (Callrtcfilter), un service d'appel audio (Audiocall), un service d'appel vidéo (Videocall), un service d'informations sur l'appelant (Whocallme), un service de messagerie instantanée (Chat), un service de présence (Presence), un service de partage d'écran (Screenshare), un service de vidéoconférence (Meetingrooms) etc.

On précise ici que les services de communication offerts par un tel environnement de communication selon l'invention ne sont pas limités aux modes de communication audio ou vidéo (temps réel) interpersonnels mais englobent également tous les autres services de communication interpersonnels, tels que la messagerie instantanée ou la messagerie électronique (email), ainsi que des services de communication associés (messagerie, filtrage, etc.) ou bien dérivés ou complémentaires, tels que des services de présence de géolocalisation, de jeux. Dans le cadre de la présente invention, on désigne ainsi l'ensemble de ces services par "services de communication" interprétés au sens large.

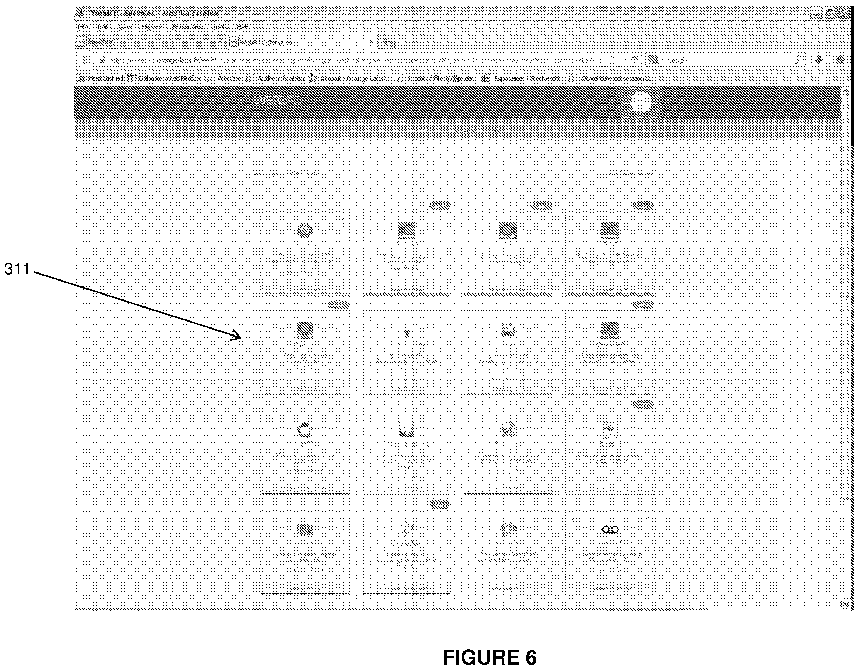

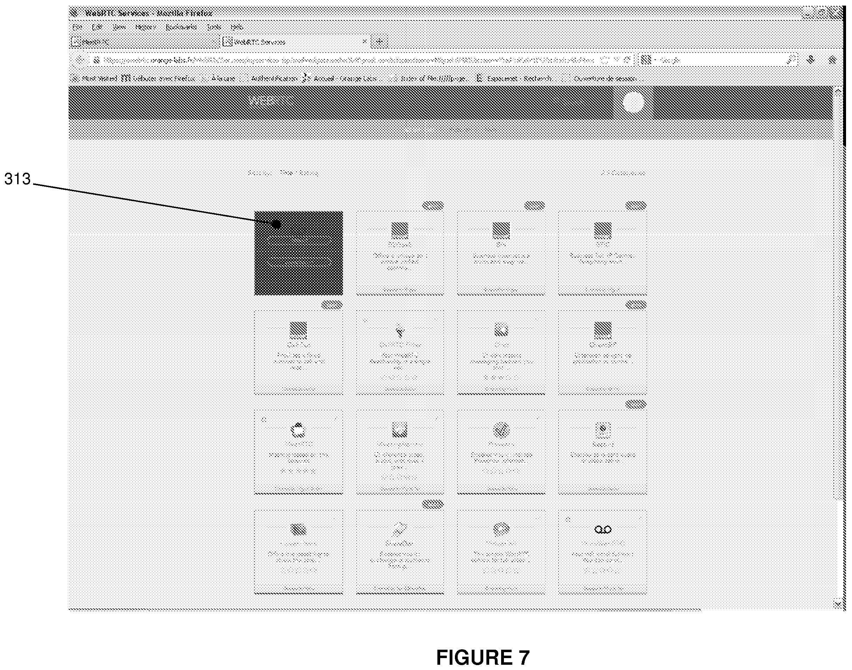

Toujours à la figure 4, si l'utilisateur désire souscrire à un service supplémentaire, il peut le faire directement en cliquant sur la zone active 307 (Webrtc Services Portal), ce qui provoque l'activation d'une URL (*Uniform Resource Locator*) et le chargement d'une page web d'accueil du serveur d'applications AS, comme illustré par les figures 6 et 7, décrites plus bas.

De retour à la figure 2, après la mise à jour dans l'interface graphique affichée par le navigateur BRW1 des services actifs pour l'utilisateur U1, ce dernier peut alors sélectionner (S207) via l'interface graphique, un identifiant d'un de ses contacts, dans cet exemple l'utilisateur U2, et un service de communication parmi l'ensemble de services activés, afin d'établir une communication avec l'utilisateur U2.

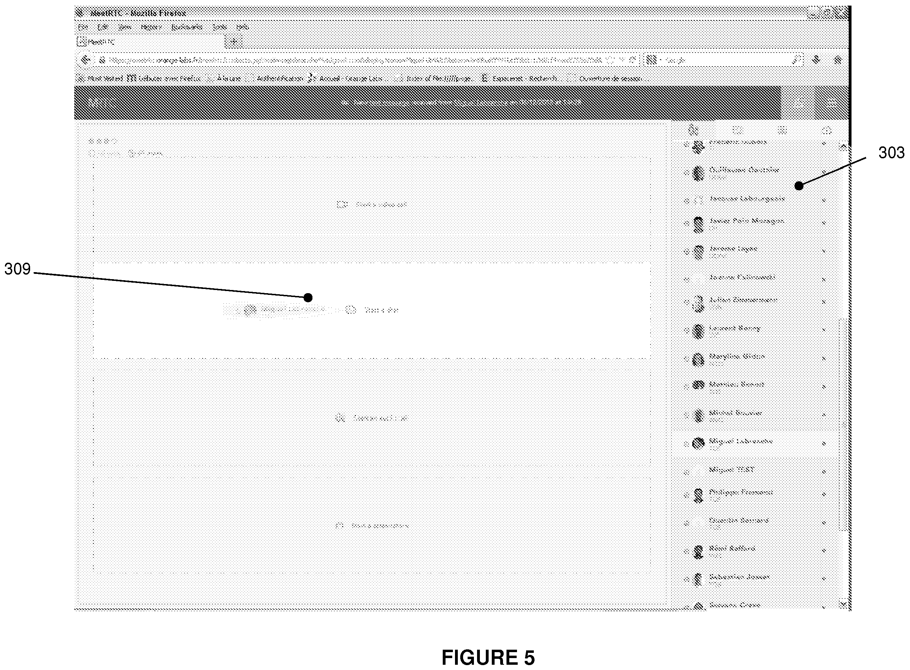

La **figure 5** représente l'interface graphique de la figure 4 après sélection d'un contact par l'utilisateur de l'interface et sélection d'un mode de communication pour établir une communication avec le contact sélectionné. Dans l'exemple de réalisation illustré par la figure 5, le contact sélectionné dans la zone 303 de la fenêtre est choisi par sélection d'une icône qui est ensuite déposée selon un processus glisser-déposer (*drag-and-drop* en anglais) dans la partie centrale de fenêtre qui affiche ici quatre zones superposées, chacune correspondant à un mode de communication différent. Dans l'exemple illustré ici, l'icône du contact sélectionné est déposée dans la zone 309 qui affiche le texte "start a chat" ce qui déclenche l'établissement d'une communication de messagerie instantanée avec le contact sélectionné.

Toujours à la figure 2, à l'étape S209, l'application web du navigateur BRW1 envoie un message de demande de communication avec l'utilisateur U2 correspondant au service choisi, à destination du terminal T2 (navigateur BRW2). On suppose ici que le terminal T2 de l'utilisateur U2 est déjà connecté au serveur d'environnement EVS via son navigateur.

En pratique, dans le mode de réalisation décrit, le message de demande de communication peut être un message selon le format de données JSON (*JavaScript Object Notation*) transmis via un canal WebSocket (normalisé par l'IETF dans le RFC 6455).

A l'étape S209, suite à la réception du message de demande de communication au service sélectionné par l'utilisateur U1, l'application APP mise en œuvre par la page web WP2 chargée dans le navigateur BRW2 de l'utilisateur U2, détermine (S211) l'état d'activité pour l'utilisateur U2 du service sélectionné pour la demande de communication envoyée par l'utilisateur U1. Si le service demandé est actif pour l'utilisateur U2 alors la communication est établie automatiquement (étape non représentée sur la figure 2). En revanche, si le service sélectionné n'est pas actif pour l'utilisateur U2, alors l'application APP chargée par le navigateur BRW2 avertit l'utilisateur U2 par l'envoi d'une notification, par exemple en affichant une fenêtre pop-up sur le terminal de l'utilisateur U2 indiquant que l'utilisateur U1 a effectué une tentative de communication selon le service sélectionné (par exemple, la messagerie instantanée) et lui proposant de souscrire au service considéré. Une telle notification peut également de manière alternative ou additionnelle prendre la forme d'un SMS ou d'un email transmis à destination d'un terminal de l'utilisateur U2, et contenant le cas échéant au moins un lien (URL) vers le serveur d'environnement et/ou vers le serveur d'applications.

Sur réponse positive du second utilisateur, entrée (S211) par exemple en cliquant avec une souris sur un élément graphique affiché dans la fenêtre pop-up précitée, l'application web chargée dans le navigateur BRW2 envoie (S213) un message de demande d'activation du service considéré (par exemple, messagerie instantanée) à destination du serveur d'applications AS. Ce dernier effectue la souscription de l'utilisateur U2 pour le service demandé dans le message de demande d'activation, et transmet (S215) un message de réponse d'activation correspondant, à destination du navigateur BRW2. Le code de l'application web (WP2) est alors mis à jour (S217) et le service de communication en question devient actif dans l'environnement de communication de l'utilisateur U2, affiché par le navigateur BRW2.

L'utilisateur U2 peut alors initier à son tour une demande de communication selon le service de communication nouvellement activé (messagerie instantanée par exemple), ce qui se traduit par l'envoi (S219) d'une demande d'établissement de communication à destination du navigateur BRW1 de l'utilisateur U1. A noter que selon l'implémentation choisie, la mise en relation peut être automatiquement déclenchée dès que le mode de communication sélectionné par l'utilisateur U1 est activé pour l'utilisateur U2.

La **figure 6** représente une interface graphique affichée par un navigateur web d'un terminal utilisateur après chargement par le navigateur de la page d'accueil du serveur d'applications AS. A noter qu'une fois la page d'accueil du serveur AS chargée dans le navigateur, cette page peut être stockée localement dans le navigateur, permettant à l'utilisateur un accès en lecture à la liste de ses applications, hors connexion avec les serveurs d'application et d'environnement.

Comme illustré sur la figure 6, l'utilisateur a la possibilité de choisir des applications parmi un ensemble d'applications représentées respectivement par des icônes 311. Par exemple, comme représenté à la **figure 7****,** si l'utilisateur clique sur la première icône (313) située en haut et à gauche du bloc d'icônes alors l'utilisateur a la possibilité d'obtenir des informations (bouton 'Details') sur la fonctionnalité correspondante ou de se désabonner (bouton 'Uninstall') de ce service.

En pratique, dans le mode de réalisation décrit, les messages de demande d'activation ou de désactivation de services, de réponse d'activation/désactivation de services, de demande de communication selon un service sélectionné, de demande d'activation d'un service sélectionné, sont des messages utilisant le protocole HTTP ou un protocole similaire compatible avec une technologie de type WebRTC, et l'application web chargée par le navigateur d'un terminal d'utilisateur par connexion au serveur d'environnement EVS, est une application utilisant le langage JavasScript ou un langage similaire compatible avec une technologie de type WebRTC.

La présente invention fournit ainsi un service de communication unifiée qui offre une grande flexibilité permettant à un utilisateur de pouvoir composer son propre environnement, à la manière d'un puzzle ou d'un jeu de LEGO®, en choisissant les applications ou les services qu'il souhaite réellement utiliser, en fonction de ses besoins ou de son budget.

## Revendications

1. Procédé de communication selon une technologie de type WebRTC sur un réseau de communication, **caractérisé en ce qu'**il comprend des étapes de :
- connexion (S201) d'un premier terminal d'un premier utilisateur à un serveur d'environnement (EVS), fournissant un environnement de communication unifiée, et chargement (S201) dans un navigateur web du premier terminal d'une application web incorporée dans une page web fournie par ledit serveur d'environnement ;
- envoi (S203) d'un message de demande d'activation de services, par l'application web chargée dans le navigateur web du premier terminal du premier utilisateur, à destination d'un serveur d'applications, afin de déterminer des services de communication actuellement autorisés pour le premier utilisateur ;
- réception (S205) par ledit navigateur d'un message de réponse d'activation de services, ledit message de réponse contenant des données d'accès à un ensemble de services de communication, et activation par l'application web dans le premier terminal, de chaque service dudit ensemble ;
- mise à jour (S207) d'une interface graphique d'environnement de communication, affichée dans le premier terminal par ladite application web, avec ledit ensemble de services de communication.

2. Procédé selon la revendication 1, comprenant une opération de mise à disposition des utilisateurs de l'environnement de communication, d'une plateforme de services de communication sous forme d'applications indépendantes, par le serveur d'applications, ladite opération comprenant :
- l'activation ou la désactivation automatique d'un service de communication donné pour un utilisateur considéré, en fonction de l'état de souscription ou de dé-souscription audit service par l'utilisateur, et/ou en fonction d'un état contextuel de l'utilisateur lié au type de terminal de l'utilisateur et/ou au débit de connexion réseau du terminal, et/ou en fonction d'une information de géolocalisation du terminal ;
- l'activation ou la désactivation, à la demande de l'utilisateur, en réponse à un message de demande d'activation ou de désactivation transmis par un terminal de l'utilisateur ;
- la génération et l'envoi à destination d'un terminal d'utilisateur, d'un message de réponse d'activation ou de désactivation de service, en réponse à un message de demande d'activation ou de désactivation de service.

3. Procédé selon l'une quelconque des revendications 1 à 2, comprenant la sélection via ladite interface graphique, d'un identifiant d'un second utilisateur et d'un service de communication parmi l'ensemble de services autorisés pour le premier utilisateur et l'envoi par le navigateur du premier terminal d'un message de demande de communication selon le service sélectionné, à destination d'un second terminal associé à l'identifiant du second utilisateur.

4. Procédé selon la revendication 3, comprenant, suite à la réception par le second terminal connecté audit serveur d'environnement, dudit message de demande de communication au service sélectionné par le premier utilisateur, des étapes de :
- détermination de l'état d'activité pour le second utilisateur du service sélectionné par le premier utilisateur, et si le service sélectionné n'est pas actif,
- proposition automatique au second utilisateur via un moyen d'interface utilisateur du second terminal de souscrire au service sélectionné par le premier utilisateur ;
- sur réponse positive du second utilisateur entrée via un moyen d'interface utilisateur du second terminal, envoi d'un message de demande d'activation dudit service sélectionné, par une application web chargée dans le navigateur du second terminal, à destination du serveur d'applications ;
- réception par le second navigateur d'un message de réponse d'activation du service sélectionné par le premier utilisateur, et activation par l'application web dans le second terminal du service sélectionné.

5. Procédé selon l'une quelconque des revendications 1 à 4, dans lequel chaque service de communication correspond à un bloc de code présent initialement dans le code source de ladite application web chargée par un navigateur d'un terminal d'utilisateur, ce bloc de code étant activé suite à la réception par le navigateur d'un message de réponse d'activation du service lors de la souscription au service par l'utilisateur ou bien lors de la connexion du terminal au serveur d'environnement, l'utilisateur ayant déjà souscrit au service.

6. Procédé selon l'une quelconque des revendications 1 à 4, dans lequel chaque service de communication correspond à un bloc de code non présent initialement dans le code source de ladite application web chargée par un navigateur d'un terminal d'utilisateur, l'activation d'un service correspondant à un bloc de code étant réalisée par la transmission du bloc de code source correspondant, par l'intermédiaire d'un message d'activation du service, reçu dans le terminal suite à la souscription au service par l'utilisateur, ou lors de la connexion du terminal au serveur d'environnement, l'utilisateur ayant déjà souscrit au service.

7. Procédé selon l'une quelconque des revendications 4 à 6, dans lequel lesdits messages
- de demande d'activation de services,
- de réponse d'activation de services,
- de demande de communication selon un service sélectionné,
- de demande d'activation d'un service sélectionné,
sont des messages utilisant le protocole HTTP ou un protocole similaire compatible avec une technologie de type WebRTC, et ladite application web chargée par le navigateur d'un terminal d'utilisateur par connexion audit serveur d'environnement, est une application utilisant le langage JavasScript ou un langage similaire compatible avec une technologie de type WebRTC.

8. Système de communication utilisant une technologie de type WebRTC sur un réseau de communication, ledit système de communication étant **caractérisé en ce qu'**il comprend un serveur d'applications (AS), hébergeant une plateforme de téléchargement d'applications de communication accessible par l'intermédiaire d'un navigateur web d'un terminal d'utilisateur, ladite plateforme comprenant :
- un serveur d'environnement (EVS), fournissant un environnement de communication unifiée, par l'intermédiaire d'une application web mise à disposition pour téléchargement à partir de navigateurs web équipant des terminaux d'utilisateurs ;
- des moyens d'accès à un ensemble d'applications de communication offrant chacune un service de communication distinct pouvant être souscrit par un utilisateur de manière indépendante des autres services ;
- des moyens de traitement de messages de demande d'activation ou de désactivation de services, en provenance des terminaux d'utilisateurs, lesdits moyens de traitement étant configurés pour activer ou désactiver un service de communication pour un utilisateur considéré, en fonction d'au moins une condition liée à une situation contextuelle de l'utilisateur ;
- des moyens de génération et d'envoi à destination d'un terminal d'utilisateur, d'un message de réponse d'activation ou de désactivation de services en réponse à un message de demande d'activation ou de désactivation de services.

9. Système selon la revendication 8, dans lequel une condition liée à une situation contextuelle d'un utilisateur comprend au moins un élément parmi : l'état de souscription ou de dé-souscription à un service pour l'utilisateur, un type de terminal de l'utilisateur, un débit de connexion réseau du terminal de l'utilisateur, une information de géolocalisation du terminal de l'utilisateur.

10. Application web fournissant des fonctionnalités de communication de type WebRTC entre navigateurs web, **caractérisée en ce qu'**elle est incorporée dans une page web fournie par un serveur d'environnement fournissant un environnement de communication unifiée, et ce qu'elle comprend des instructions de programme dont l'exécution par un navigateur web d'un terminal d'un utilisateur, suite à la connexion dudit terminal au serveur d'environnement et au chargement de ladite page web dans le navigateur web du terminal, provoque la mise en oeuvre d'étapes de :
- envoi d'un message de demande d'activation de services web du navigateur à destination d'un serveur d'applications, afin de déterminer les services de communication qui sont actuellement autorisés pour l'utilisateur ;
- réception par le navigateur d'un message de réponse d'activation de services, le message de réponse contenant des données d'accès à un ensemble de services de communication, et activation dans le terminal, de chaque service de l'ensemble de services ;
- affichage d'une interface graphique d'environnement de communication et mise à jour de cette interface graphique par le navigateur avec ledit ensemble de services de communication ;
- suite à la sélection par l'utilisateur via ladite interface graphique, d'un identifiant d'un second utilisateur et d'un service de communication parmi l'ensemble de services, envoi par le navigateur d'un message de demande de communication selon le service sélectionné, à destination d'un terminal du second utilisateur.

11. Serveur de communication (EVS) accessible par un navigateur web, destiné à fournir un environnement de communication unifié selon une technologie de type WebRTC entre navigateurs web, ledit serveur de communication étant **caractérisé en ce qu'**il inclut un serveur web hébergeant au moins une page web incluant une application web selon la revendication 10.

12. Serveur d'applications (AS) mis en oeuvre dans un système selon l'une quelconque des revendications 8 à 9.

13. Programme d'ordinateur stocké sur un support d'informations pour la mise en oeuvre de tout ou partie des étapes d'un procédé selon l'une quelconque des revendications 1 à 7, lorsque le programme est exécuté par un processeur d'un système informatique.

## Patentansprüche

1. Verfahren zur Kommunikation gemäß einer WebRTC-Technologie in einem Kommunikationsnetz, **dadurch gekennzeichnet, dass** es die folgenden Schritte umfasst:
- Verbinden (S201) eines ersten Endgeräts eines ersten Benutzers mit einem Umgebungsserver (EVS), der eine Umgebung für einheitliche Kommunikation bereitstellt, und Laden (S201) einer ersten Webanwendung, die in eine Webseite integriert ist, die vom Umgebungsserver bereitgestellt wird, in einen Webbrowser des ersten Endgeräts;
- Senden (S203) einer Nachricht zur Anforderung der Aktivierung von Diensten, durch die Webanwendung, die in den Webbrowser des ersten Endgeräts des ersten Benutzers geladen ist, an einen Anwendungsserver, um Kommunikationsdienste zu bestimmen, die derzeit für den ersten Benutzer erlaubt sind;
- Empfangen (S205), vom Browser, einer Antwortnachricht zur Aktivierung von Diensten, wobei die Antwortnachricht Daten zum Zugriff auf einen Satz von Kommunikationsdiensten enthält, und Aktivieren jedes Dienstes des Satzes von der Webanwendung im ersten Endgerät;
- Aktualisieren (S207) einer graphischen Kommunikationsumgebungsschnittstelle, die im ersten Endgerät durch die Webanwendung angezeigt wird, mit dem Satz von Kommunikationsdiensten.

2. Verfahren nach Anspruch 1, umfassend einen Vorgang des Bereitstellens, an die Benutzer der Kommunikationsumgebung, einer Plattform für Kommunikationsdienste in Form von unabhängigen Anwendungen, durch den Anwendungsserver, der Vorgang umfassend:
- das automatische Aktivieren oder Deaktivieren eines bestimmten Kommunikationsdiensts für einen betrachteten Benutzer in Abhängigkeit vom Zustand der Subskription oder Entsubskription des Dienstes durch den Benutzer und/oder in Abhängigkeit von einem Kontextzustand des Benutzers in Verbindung mit der Art des Endgeräts des Benutzers und/oder dem Netzverbindungsdurchsatz des Endgeräts und/oder in Abhängigkeit von einer Geolokalisierungsinformation des Endgeräts;
- das Aktivieren oder Deaktivieren, auf Anforderung des Benutzers als Antwort auf eine Aktivierungs- oder Deaktivierungs-Anforderungsnachricht, die von einem Endgerät des Benutzers übertragen wird;
- das Erzeugen und Senden einer Dienst-Aktivierungs- oder Deaktivierungs-Antwortnachricht an ein Benutzerendgerät als Antwort auf eine Nachricht zur Anforderung der Dienst-Aktivierung oder -deaktivierung.

3. Verfahren nach einem der Ansprüche 1 bis 2, umfassend das Auswählen, über die graphische Schnittstelle, einer Kennung eines zweiten Benutzers und eines Kommunikationsdienstes aus dem Satz von Diensten, die für den ersten Benutzer erlaubt sind, und das Senden, durch den Browser des ersten Endgeräts, einer Nachricht zur Anforderung von Kommunikation gemäß dem ausgewählten Dienst, an ein zweites Endgerät, das der Kennung des zweiten Benutzers zugeordnet ist.

4. Verfahren nach Anspruch 3, umfassend, nach dem Empfang, durch das zweite Endgerät, das mit dem Umgebungsserver verbunden ist, der Nachricht zur Anforderung von Kommunikation an den Dienst, der vom ersten Benutzer ausgewählt wurde, die Schritte des:
- Bestimmens des Aktivitätszustands für den zweiten Benutzer des Dienstes, der vom ersten Benutzer ausgewählt wurde, und wenn der ausgewählte Dienst nicht aktiv ist,
- automatisches Vorschlagen an den zweiten Benutzer über ein Benutzerschnittstellenmittel des zweiten Endgeräts, den Dienst zu subskribieren, der vom ersten Benutzer ausgewählt wurde;
- bei positiver Antwort des zweiten Benutzers, die über ein Benutzerschnittstellenmittel des zweiten Endgeräts eingegeben wird, Senden einer Nachricht zur Anforderung der Aktivierung des ausgewählten Dienstes durch eine Webanwendung, die in den Browser des zweiten Endgeräts geladen ist, an den Anwendungsserver;
- Empfangen, durch den zweiten Browser, einer Antwortnachricht zur Aktivierung des Dienstes, der vom ersten Benutzer ausgewählt wurde, und Aktivieren, durch die Webanwendung im zweiten Endgerät, des ausgewählten Dienstes.

5. Verfahren nach einem der Ansprüche 1 bis 4, wobei jeder Kommunikationsdienst einem Codeblock entspricht, der anfangs im Quellcode der Webanwendung vorhanden ist, die von einem Browser eines Benutzerendgeräts geladen ist, wobei dieser Codeblock nach dem Empfang, durch den Browser, einer Antwortnachricht zur Aktivierung des Dienstes bei der Subskription des Dienstes durch den Benutzer oder bei der Verbindung des Endgeräts mit dem Umgebungsserver, wobei der Benutzer den Dienst bereits subskribiert hat, aktiviert wird.

6. Verfahren nach einem der Ansprüche 1 bis 4, wobei jeder Kommunikationsdienst einem Codeblock entspricht, der anfangs nicht im Quellcode der Webanwendung vorhanden ist, die von einem Browser eines Benutzerendgeräts geladen ist, wobei die Aktivierung eines Dienstes, die einem Codeblock entspricht, durch die Übertragung des entsprechenden Quellcodeblocks mittels einer Nachricht zur Aktivierung des Dienstes durchgeführt wird, die nach der Subskription des Dienstes durch den Benutzer oder bei der Verbindung des Endgeräts mit dem Umgebungsserver, wobei der Benutzer den Dienst bereits subskribiert hat, im Endgerät empfangen wird.

7. Verfahren nach einem der Ansprüche 4 bis 6, wobei
- die Nachrichten zur Anforderung der Aktivierung von Diensten,
- die Antwortnachrichten zur Aktivierung von Diensten,
- die Nachrichten zur Anforderung von Kommunikation gemäß einem ausgewählten Dienst,
- die Nachrichten zur Anforderung der Aktivierung eines ausgewählten Dienstes,
Nachrichten sind, die das HTTP-Protokoll oder ein ähnliches Protokoll nutzen, das mit einer WebRTC-Technologie kompatibel ist, und die Webanwendung, die vom Browser eines Benutzerendgeräts durch Verbindung mit dem Umgebungsserver geladen ist, eine Anwendung ist, die die Sprache JavaScript oder eine ähnliche Sprache nutzt, die mit einer WebRTC-Technologie kompatibel ist.

8. Kommunikationssystem, das eine WebRTC-Technologie in einem Kommunikationsnetz nutzt, wobei das Kommunikationssystem **dadurch gekennzeichnet ist, dass** es einen Anwendungsserver (AS) umfasst, der eine Plattform zum Fernladen von Kommunikationsanwendungen beherbergt, auf die über einen Webbrowser eines Benutzerendgeräts zugegriffen werden kann, die Plattform umfassend:
- einen Umgebungsserver (EVS), der eine Umgebung für einheitliche Kommunikation über eine Webanwendung bereitstellt, die zum Fernladen von Webbrowsern bereitgestellt wird, die in Benutzerendgeräten enthalten sind;
- Mittel zum Zugriff auf einen Satz von Kommunikationsanwendungen, die jeweils einen verschiedenen Kommunikationsdienst anbieten, den ein Benutzer unabhängig von den anderen Diensten subskribieren kann;
- Mittel zur Verarbeitung von Nachrichten zur Anforderung der Aktivierung oder Deaktivierung von Diensten von den Benutzerendgeräten, wobei die Verarbeitungsmittel dazu ausgebildet sind, einen Kommunikationsdienst für einen betrachteten Benutzer in Abhängigkeit von mindestens einer Bedingung in Verbindung mit einer Kontextsituation des Benutzers zu aktivieren oder zu deaktivieren;
- Mittel zur Erzeugung und Sendung einer Antwortnachricht zur Aktivierung oder Deaktivierung von Diensten an ein Benutzerendgerät als Antwort auf eine Nachricht zur Anforderung der Aktivierung oder Deaktivierung von Diensten.

9. System nach Anspruch 8, wobei eine Bedingung in Verbindung mit einer Kontextsituation eines Benutzers mindestens ein Element aus folgenden umfasst: den Zustand der Subskription oder Entsubskriptioneines Dienstes für den Benutzer, eine Endgeräteart des Benutzers, einen Netzverbindungsdurchsatz des Endgeräts des Benutzers, eine Geolokalisierungsinformation des Endgeräts des Benutzers.

10. Webanwendung, die WebRTC-Kommunikationsfunktionalitäten zwischen Webbrowsern bereitstellt, **dadurch gekennzeichnet, dass** sie in einer Webseite enthalten ist, die von einem Umgebungsserver bereitgestellt wird, der eine Umgebung für einheitliche Kommunikation bereitstellt, und dass sie Programmanweisungen umfasst, deren Ausführung durch einen Webbrowser eines Endgeräts eines Benutzers nach der Verbindung des Endgeräts mit dem Umgebungsserver und dem Laden der Webseite in den Webbrowser des Endgeräts die Durchführung der folgenden Schritte bewirkt:
- Senden einer Nachricht zur Anforderung der Aktivierung von Webdiensten vom Browser an einen Anwendungsserver, um die Kommunikationsdienste zu bestimmen, die derzeit für den Benutzer erlaubt sind;
- Empfangen, vom Browser, einer Antwortnachricht zur Aktivierung von Diensten, wobei die Antwortnachricht Daten zum Zugriff auf einen Satz von Kommunikationsdiensten enthält, und Aktivieren jedes Dienstes des Satzes von Diensten im Endgerät;
- Anzeigen einer graphischen Kommunikationsumgebungsschnittstelle und Aktualisieren dieser graphischen Schnittstelle durch den Browser mit dem Satz von Kommunikationsdiensten;
- nach dem Auswählen, durch den Benutzer über die graphische Schnittstelle, einer Kennung eines zweiten Benutzers und eines Kommunikationsdienstes aus dem Satz von Diensten, Senden, durch den Browser, einer Nachricht zur Anforderung von Kommunikation gemäß dem ausgewählten Dienst, an ein Endgerät des zweiten Benutzers.

11. Kommunikationsserver (EVS), auf den durch einen Webbrowser zugegriffen werden kann, der dazu bestimmt ist, eine Umgebung für einheitliche Kommunikation gemäß einer WebRTC-Technologie zwischen Webbrowsern bereitzustellen, wobei der Kommunikationsserver **dadurch gekennzeichnet ist, dass** er einen Webserver aufweist, der mindestens eine Webseite beherbergt, die eine Webanwendung nach Anspruch 10 aufweist.

12. Anwendungsserver (AS), der in einem System nach einem der Ansprüche 8 bis 9 eingesetzt wird.

13. Computerprogramm, das auf einem Informationsträger gespeichert ist, zur Durchführung aller oder einiger der Schritte eines Verfahrens nach einem der Ansprüche 1 bis 7, wenn das Programm von einem Prozessor eines Datenverarbeitungssystems ausgeführt wird.

## Claims

1. Method of communication according to a WebRTC type technology on a communication network, **characterized in that** it includes steps of:
- connection (S201) of a first terminal of a first user to an environment server (EVS), providing a unified communication environment, and loading (S201) of a web application incorporated in a web page provided by said environment server into a web browser on the first terminal;
- sending (S203) of a service activation request message, by the web application loaded in the web browser on the first terminal of the first user, to an application server, in order to determine communication services currently authorized for the first user;
- reception (S205) by said browser of a service activation response message, said response message containing data for access to a set of communication services, and activation by the web application, in the first terminal, of each service of said set;
- updating (S207) of a communication environment graphical interface, displayed in the first terminal by said web application, with said set of communication services.

2. Method according to Claim 1, including an operation of providing users of the communication environment with a communication services platform in the form of independent applications, by the application server, said operation including:
- automatic activation or deactivation of a given communication service for a user considered, according to the subscribed or unsubscribed status to said service by the user, and/or according to a contextual status of the user related to the user's terminal type and/or the network connection rate of the terminal, and/or according to geolocation information regarding the terminal;
- activation or deactivation, at the request of the user, in response to an activation or deactivation request message transmitted by a user's terminal;
- generating and sending to a user terminal of a service activation or deactivation response message, in response to a service activation or deactivation request message.

3. Method according to either one of Claims 1 and 2, including the selection, via said graphical interface, of an identifier of a second user and of a communication service from the set of services authorized for the first user and the sending by the browser on the first terminal of a communication request message according to the selected service, to a second terminal associated with the identifier of the second user.

4. Method according to Claim 3, including, following the reception, by the second terminal connected to said environment server, of said communication request message to the service selected by the first user, steps of:
- determining the activity status for the second user of the service selected by the first user, and if the selected service is not active,
- automatic proposal to the second user via a user interface means on the second terminal to subscribe to the service selected by the first user;
- on a positive response from the second user entered via a user interface means on the second terminal, sending a request message for activation of said selected service, by a web application loaded in the browser on the second terminal, to the application server;
- reception by the second browser of a response message for activation of the service selected by the first user, and activation by the web application in the second terminal of the selected service.

5. Method according to any one of Claims 1 to 4, in which each communication service corresponds to a code block initially present in the source code of said web application loaded by a browser on a user terminal, this code block being activated following the reception by the browser of a service activation response message when the user subscribes to the service or when the terminal connects to the environment server, the user having already subscribed to the service.

6. Method according to any one of Claims 1 to 4, in which each communication service corresponds to a code block not initially present in the source code of said web application loaded by a browser on a user terminal, the activation of a service corresponding to a code block being performed by the transmission of the corresponding source code block, via a service activation message, received in the terminal following the subscription to the service by the user, or when the terminal connects to the environment server, the user having already subscribed to the service.

7. Method according to any one of Claims 4 to 6, in which said
- service activation request,
- service activation response,
- communication request according to a selected service,
- selected service activation request messages are messages using the HTTP protocol or a similar protocol compatible with a WebRTC type technology, and said web application loaded by the browser on a user terminal by connecting to said environment server is an application using the JavaScript language or a similar language compatible with a WebRTC type technology.

8. Communication system using a WebRTC type technology on a communication network, said communication system being **characterized in that** it includes an application server (AS), hosting a download platform for communication applications accessible via a web browser on a user terminal, said platform including:
- an environment server (EVS), providing a unified communication environment, via a web application made available for downloading from web browsers with which user terminals are provided;
- means of access to a set of communication applications each offering a separate communication service that may be subscribed to by a user independently of other services;
- means of processing service activation or deactivation request messages, originating from user terminals, said means of processing being configured for activating or deactivating a communication service for a user considered, according to at least one condition related to a contextual situation of the user;
- means of generating and sending, to a user terminal, a service activation or deactivation response message, in response to a service activation or deactivation request message.

9. System according to Claim 8, in which a condition related to a contextual situation of a user includes at least one element from: the subscribed or unsubscribed status to a service for the user, a user's terminal type, a network connection rate of the user's terminal, geolocation information regarding the user's terminal.

10. Web application providing WebRTC type communication functionalities between web browsers, **characterized in that** it is incorporated in a web page provided by an environment server providing a unified communication environment, and **in that** it includes program instructions the execution of which by a web browser on a terminal of a user, following the connection of said terminal to the environment server and the loading of said web page in the web browser on the terminal, causes the implementation of steps of:
- sending of a web service activation request message from the browser to an application server, in order to determine the communication services that are currently authorized for the user;
- reception by the browser of a service activation response message, the response message containing data for access to a set of communication services, and activation, in the terminal, of each service of the set of services;
- display of a communication environment graphical interface and updating of this graphical interface by the browser with said set of communication services;
- following the selection by the user, via said graphical interface, of an identifier of a second user and of a communication service from the set of services, sending by the browser of a communication request message according to the selected service, to a terminal of the second user.

11. Communication server (EVS) accessible by a web browser, intended to provide a unified communication environment according to a WebRTC type technology between web browsers, said communication server being **characterized in that** it includes a web server hosting at least one web page including a web application according to Claim 10.

12. Application server (AS) implemented in a system according to either one of Claims 8 and 9.

13. Computer program stored on an information medium for the implementation of all or some of the steps of a method according to any one of Claims 1 to 7 when the program is executed by a processor in a computer system.
